# EUROPÄISCHE PATENTSCHRIFT

(11) **EP 0 405 153 B1**
(45) Veröffentlichungstag und Bekanntmachung des Hinweises auf die Patenterteilung: **02.03.1994**
(21) Anmeldenummer: 90110142.8
(22) Anmeldetag: 29.05.1990
(51) Int. Cl.: G01N 25/02, G01N 25/20

(54) **Messkopf für die Differenzthermoanalyse**
Measuring head for differential thermal analysis
Tête de mesure pour l'analyse thermique différentielle

(30) Priorität: 30.06.1989 DE 3921655
(43) Veröffentlichungstag der Anmeldung: 02.01.1991
(73) Patentinhaber: NETZSCH-GERÄTEBAU GmbH, D-95100 Selb (DE)
(72) Erfinder: Bräuer, Gerhard, D-8672 Selb (DE); Schmidt, Martin, D-8672 Selb (DE); Wassmer, Erich, D-8672 Sellb (DE)
(74) Vertreter: von Hellfeld, Axel, Dr. Dipl.-Phys.,

(56) Entgegenhaltungen:
- US-A- 4 095 453
- US-A- 4 606 649
- Electronique industrielle no. 118, November 1968, Seiten 707 - 711; G. Lhuillery: "La micro-analyse thermique differentielle;etude et applications d'un micro-analyseur"
- PATENT ABSTRACTS OF JAPAN vol. 10, no. 93 (P-445)(2150) 10 April 1986, & JP-A-60 228946
- ANALYTICAL CHEMISTRY. vol. 36, no. 11, Oktober 1964, COLUMBUS US Seiten 2172 - 2174; E.M. Barrall II, et al.: "Calorimetric Studies-by Differential Thermal Analysis"
- Hemminger/Höhne: Calorimetry, Weinheim, 1984, ISBN 3-527-25948-1, S. 196-203

## Beschreibung

Die Erfindung betrifft eine Vorrichtung gemäß Oberbegriff des Anspruchs 1.

Eine solche Vorrichtung wird z.B. offenbart in Electronique industrielle, no.118, November 1968, Seiten 707-711, G. Lhuillery: "La micro-analyse thermique differentielle; etude et applications d'un micro-analysateur". Dieser Artikel offenbart ebenfalls, daß der Meßkopf mit den Gefäßen in einer Platinkammer angeordnet ist.

Die Beschichtung der Innenwand eines Ofens einer Vorrichtung zur Differential Scannung Calorimetry ist bekannt aus PATENT ABSTRACTS OF JAPAN, vol.10, no.93, (P-445)(2150) 10 April 1986 & JP-A-60 228946 (SHIMAZU SEISHAKUSHO K.K.) 14 Nov.85. Die Beschichtung bewirkt unter anderem, daß der größte Teil der von den Gefäßen kommenden Strahlungsenergie von der Ofenwand reflektiert und nicht absorbiert wird.

US-A-4,095,453 offenbart eine Meßzelle zur DTA, bei der die Aufnahmen für die Gefäße als Erhebungen in einer Metallplattform ausgebildet sind. Es wird in Sp.3,Z.5-8 darauf hingewiesen, daß der thermische Widerstand durch Anpassen der Größe und Dicke der Plattform im Hinblick auf die Empfindlichkeit optimiert werden kann.

Die Differenzthermoanalyse (DTA) ist eine thermoanalytische Methode, bei der thermische Effekte einer zu untersuchenden Probe im Vergleich zu einer Referenzsubstanz gemessen werden. Mit der Differenzthermoanalyse können Stoffe auf spezifische Eigenschaften untersucht werden, insbesondere können charakteristische Temperaturen, wie z.B. die Schmelztemperatur, kalorische Größen, wie die spezifische Wärme, sowie daraus abgeleitete Größen, wie z.B. die Aktivierungsenergie, ermittelt werden.

In der Differenzthermoanalyse werden zwei Verfahren unterschieden: Zum einen kann die Temperaturdifferenz gemessen werden, die sich aufgrund unterschiedlicher Wärmeströme zwischen der Probe und der Referenzsubstanz einstellt und zum anderen kann die Leistung gemessen werden, die zur Kompensation dieser Wärmestrom-Differenz erforderlich ist. Für dieses Verfahren ist auch die Bezeichnung DSC (Differential Scanning Calorimetry) üblich.

Die in der thermischen Analyse (TA) zu verwendende Nomenklatur ist in der DIN 51005 vom November 1983 geregelt. Die Kenntnis dieser DIN wird hier vorausgesetzt.

Ergänzend zur Differenzthermoanalyse kann auch die sogenannte Thermogravimetrie (TG) eingesetzt werden, bei der die Massenänderung einer Probe gemessen wird, welche wie bei der DTA einer Temperaturänderung unterworfen wird.

Bekannt ist ebenfalls die sogenannte dynamische Wärmestrom-Differenzkalorimetrie als Sonderform der Differenzthermoanalyse. Bei ihr handelt es sich um eine direkte quantitative Meßmethode zur Bestimmung des Wärmeumsatzes und der Enthalpieänderung einer Probe, die einem vorgegebenen Temperaturprogramm mit konstanten Heizraten unterworfen wird. Dadurch wird der Wärmestrom von und zur Probe über die Temperaturdifferenz zwischen der Referenzprobe und der zu untersuchenden Probe gemessen. Die Hauptanwendungen dieses Verfahrens liegen neben der Messung des Wärmeumsatzes bei thermischen Effekten und Reaktionen in der Bestimmung von Umwandlungstemperaturen, Reinheiten, Polymorphien und Oxidationsstabilitäten. Auch kann mit dem Verfahren die Kinetik von chemischen Reaktionen untersucht werden.

Weiterhin kann mit der Differenztheromanalyse und insbesondere der Wärmestrom-Differenzkalorimetrie die spezifische Wärmekapazität von Stoffen als Funktion der Temperatur bestimmt werden. Die spezifische Wärmekapazität ist eine charakteristische Stoffeigenschaft, die insbesondere in der Chemie, der Metallurgie, der Nukleartechnik und der keramischen Industrie zunehmend an Bedeutung gewinnt. Zum Beispiel ist die Kenntnis der spezifischen Wärmekapazitäten bei verschiedenen Temperaturen zur Berechnung der anfallenden Temperaturerhöhung bei thermischen Prozessen notwendig, um die Betriebssicherheit zu gewährleisten.

Bei den genannten thermoanalytischen Verfahren werden eine zu untersuchende Probe und ein bekanntes Referenzmaterial in einem Ofen einem exakt vorgegebenen Temperaturprogramm unterworfen, d.h. linear mit der Zeit aufgeheizt oder abgekühlt oder isotherm gehalten. In der üblichen Nomenklatur wird vom sogenannten Referenzmaterial die sogenannte Standardprobe unterschieden. Eine Standardprobe wird anstelle der zu untersuchenden Probe bei Kalibriermessungen verwendet.

Die bekannten Vorrichtungen zur Durchführung der Differenzthermoanalyse weisen deshalb einen Ofen auf, in dem ein Meßkopf angeordnet wird, welcher die zu untersuchende Probe und das Referenzmaterial aufnimmt. Im Meßkopf sind Thermofühler (Thermoelemente) angeordnet, um die Temperaturen der Probe, des Referenzmaterials und ggf. leerer Gefäße zu messen. Die heute bekannten Geräte weisen gewöhnlich Temperatursteuerungen für die Öfen, Datenerfassungseinrichtungen sowie Einrichtungen zur Erzeugung bestimmter Gas-Atmosphären auf.

Bekannte Meßköpfe für die Differenzthermoanalyse weisen zwei Aufnahmen auf, in denen jeweils ein Gefäß (Becher) angeordnet werden kann. Soll mit dem bekannten Meßkopf die spezifische Wärmekapazität cₚ einer Probe gemessen werden, so sind drei unterschiedliche Messungen durchzuführen: Zunächst werden zwei Gefäße in die beiden Aufnahmen des Meßkopfes eingesetzt und beide Gefäße werden leer gelassen. Es wird dann das vorgegebene Temperaturprogramm durchgeführt, d.h. der Ofen in vorgegebener Weise aufgeheizt und es werden die Temperaturen an den Gefäß-Böden gemessen, um eine sogenannte Basislinie zu erhalten, in welcher sich die Eigenschaften des Gerätes einschließlich der Gefäße niederschlagen.

Nachdem die Basislinie aufgenommen worden ist, wird nach Abkühlung des Ofens in eines der beiden Gefäße eine Kalibriersubstanz eingegeben. Die Auswahl der Kalibriersubstanz richtet sich nach dem jeweiligen Arbeitsgebiet und dem gewünschten Temperaturbereich. Die Kalibriersubstanz darf im betrachteten Temperaturbereich keine Kristallumwandlung und keinen Schmelzvorgang erfahren und darf auch keine zusätzliche Phasenänderung (wie Verdampfen, Sublimieren) aufweisen. Bei der Messung der spezifischen Wärmekapazität an einem Glas kann zum Beispiel Saphir als Kalibriersubstanz verwendet werden. Sodann wird der Ofen gemäß dem gleichen Temperaturprogramm geheizt. Dabei befindet sich in einem Becher die Kalibriersubstanz (Referenzprobe), während der andere Becher wiederum leer ist.

Schließlich wird in einer dritten Messung mit dem gleichen Temperaturprogramm die zu untersuchende Probe in eines der Gefäße gegeben, während das andere Gefäß wiederum leer bleibt.

Bei allen drei Messungen werden charakteristische Kurven gewonnen. In den Kurven wird der Wärmefluß oder die diesem proportionale Temperaturdifferenz zwischen den beiden Gefäßen über der Temperatur oder der Zeit aufgetragen. Dabei werden Wärmeflußdifferenzen (bzw. Temperaturdifferenzen) von endothermen Vorgängen in positiver und solche von exothermen Vorgängen in negativer Ordinatenrichtung aufgetragen.

Bei der Auswertung der Kurven kommt es für die Gewinnung genauer und reproduzierbarer Meßergebnisse wesentlich auf die Empfindlichkeit und das Auflösungsvermögen an (siehe DIN 51005). Soll die spezifische Wärmekapazität cₚ bei hohen Temperaturen, d.h. oberhalb 700°C gemessen werden, so wird die Messung beim Stand der Technik durch verschiedene physikalische Effekte erschwert. Zu beachten ist, daß bei Temperaturen unterhalb von etwa 500°C der Wärmeübergang zwischen den im Meßkopf angeordneten Gefäßen im wesentlichen durch Wärmeleitung erfolgt. Oberhalb von etwa 500°C nimmt aber der Wärmeübergang durch Strahlung, welcher proportional zur vierten Potenz der Temperaturdifferenz ist, merklich zu und bestimmt bei höheren Temperaturen den Wärmeübergang praktisch vollständig. Im Stand der Technik konnten aufgrund der nur schwer reproduzierbar in den Griff zu bekommenden Wärmeübergänge zwischen den Gefäßen im Meßkopf nur spezifische Wärmekapazitäten cₚ bis zu 700°C exakt bestimmt werden.

Aus der Zeitschrift ANALYTICAL CHEMISTRY, Vol. 36, 1964, Nr. 11, S. 2173 bis 2174 ist es bekannt, drei Meßgefäße für die DTA in Form eines gleichseitigen Dreiecks anzuordnen. Zwischen den Meßgefäßen befindet sich aber Freiraum. Jeder Meßbehälter sitzt auf einem eigenen Träger und ist jeweils mit Thermoelementschenkeln versehen.

Aus der ZEITSCHRIFT FÜR ANALYTISCHE CHEMIE, Bd. 233, 1968, S. 161 bis 175, ist eine Vorrichtung für die DTA bekannt, bei der drei Meßbehälter jeweils direkt von Thermoelementschenkeln abgestützt werden. In dieser Druckschrift wird ein Stand der Technik diskutiert, bei dem ein Behälter ausschließlich für die Temperaturmessung dient. Zwei weitere Behälter sind in sogenannter Differenzschaltung geschaltet. Ein solcher Stand der Technik wird in der Druckschrift als verbesserungsfähig angesehen und es wird vorgeschlagen, die Temperatur nicht direkt am Meßkopf, sondern an einer Stelle weit oberhalb desselben im Ofen zu messen.

Aus der UDSSR-Zeitschrift ZAVODSKAYA LABORATORIYA, Vol. 39, Nr. 11, S. 1412 bis 1413, November 1973 ist es bekannt, drei Meßbehälter für die Differenzthermoanalyse jeweils getrennt auf zwei Thermoelementschenkeln abzustützen. Auch hier ist also kein gemeinsamer Träger für drei Gefäße vorgesehen.

Beim Stand der Technik gemäß der FR 12 33 678 (Zusatzpatent) sind drei Meßstellen nicht in einer horizontalen Ebene angeordnet. In bezug auf einen Träger ist ein Meßgefäß tiefer als die beiden anderen positioniert. Auch hier stehen die einzelnen Meßtöpfe jeweils auf zwei Schenkeln, die ein Thermoelement bilden.

In der FR 12 33 678 (Hauptpatent) sind zwei Meßstellen beschrieben, die ebenfalls jeweils auf Thermoelementschenkeln abgestützt sind. Eine dritte Meßstelle ist in einer anderen Horizontalebene angeordnet und dient der Temperaturmessung.

Aus der Zeitschrift ANALYTICAL CHEMISTRY, Vol. 32, Nr. 4, April 1960, S. 573, 574, ist es bekannt, für die DTA drei Meßtöpfe an den Ecken eine gleichseitigen Dreiecks anzuordnen. Die drei Meßtöpfchen sind in einem Quarzröhrchen angeordnet und berühren sich. Das Quarzröhrchen ist nicht auf einem vertikal ausgerichteten Träger abgestützt, sondern hängt an einem horizontal stehenden Arm.

Der Erfindung liegt die Aufgabe zugrunde, einen Meßkopf für die Differenzthermoanalyse zu schaffen, der eine exakte Messung der spezifischen Wärmekapazität cₚ bis hinauf zu Temperaturen oberhalb von 1400°C ermöglicht, wobei die für eine Probe erforderliche Meßzeit möglichst gering sein soll.

Erfindungsgemäß wird diese Aufgabe mit den Merkmalen des Patentanspruches 1 gelöst.

In einer bevorzugten Ausgestaltung des erfindungsgemäßen Meßkopfes werden drei Aufnahmen für Gefäße so angeordnet, daß ihre Mittelpunkte an den Ecken eines gleichseitigen Dreiecks liegen. Die Aufnahmen und entsprechend die darin aufgenommenen Gefäße haben einen kreisförmigen Querschnitt. Bei einem derart erfindungsgemäß gestalteten Meßkopf genügt nach einer sogenannten Nullmessung eine einzige Messung mit einem Temperaturprogramm zur Bestimmung der spezifischen Wärmekapazität bis auf Temperaturen über 1400°C. Hierzu bleibt eines der drei Gefäße leer, in ein anderes Gefäß wird die Standardprobe (Referenzmaterial) gegeben, während das dritte Gefäß die zu untersuchende Probe enthält.

Bei einer Anordnung mit zwei Probenaufnahmen müssen bei Bestimmung der spezifischen Wärmekapazität cₚ eine Nullmessung, eine Messung mit einem Standardmaterial und eine Messung mit der untersuchenden Probe durchgeführt werden. Bei einer Dreier-Anordnung können die beiden letztgenannten Messungen durch eine einzige Messung ersetzt werden. Die Nullmessung ist aber immer erforderlich, sie muß jedoch nicht vor jeder Messung durchgeführt werden, da sie sich bei unveränderter Anordnung des Meßkopfs im Ofen von Messung zu Messung nicht ändert und als "Geräteparameter" z.B. in einem die Messungen auswertenden Rechner gespeichert werden kann.

Dadurch, daß bei dieser bevorzugten Ausgestaltung der Erfindung die drei Gefäße hinsichtlich des Wärmeübergangs vollkommen symmetrisch angeordnet sind, werden gut reproduzierbare Ergebnisse erzielt.

Die Gefäße mit der zu untersuchenden Probe und der Standardprobe sowie das leere Gefäß werden in diese Aufnahmen auf die versenkt angeordneten Böden gesetzt. Es hat sich herausgestellt, daß die versenkte Anordnung der Gefäße mit Wärmeleitung über nur wenige, etwa senkrecht stehende Stege eine Messung bis zu hohen Temperaturen bei hoher Empfindlichkeit und gutem Auflösungsvermögen ermöglicht. Das Verhältnis von Wärmeleitung und Wärmestrahlung kann mit dieser raumsparenden, kompakten Anordnung günstig dimensioniert werden. Die Wärmeleitung wird durch die Länge und den Querschnitt der Stege definiert. Dadurch, daß die Stege in der erfindungsgemäßen Anordnung senkrecht stehen, können sie verlängert werden, ohne den Abstand der Gefäße voneinander zu erhöhen, das heißt, die Wärmeleitung zwischen den Gefäßen kann ohne Verminderung des Wärmeübergangs durch Strahlung erheblich reduziert werden.

Damit die Gefäße von Messung zu Messung in ihrer relativen Stellung zueinander exakt reproduzierbar im Meßkopf positioniert werden, sind in einer weiteren vorteilhaften Ausgestaltung der Erfindung die Vertiefungen mit Laschen zum Zentrieren der Gefäße versehen. Bei der Differenzthermoanalyse kommt es zur Erzielung genauer Meßergebnisse sehr kritisch auf den Ort der Temperaturmessung an. Insbesondere bei festen oder perlenden Substanzen, die sich nicht mit gutem Wärmekontakt gleichmäßig über den Boden des Gefäßes verteilen, können nachteilige Temperatur-Inhomogenitäten auftreten. Zur Gewinnung möglichst exakter Meßergebnisse sind deshalb in einer bevorzugten Ausgestaltung der Erfindung Thermofühler jeweils mittig an den Böden der Aufnahmen befestigt, z.B. durch Punkt-Schweißung.

In einer weiteren bevorzugten Ausgestaltung ist der erfindungsgemäße Meßkopf selbst aus einem Thermoelement-Werkstoff, beispielsweise Platin/Rhodium. Der das Thermoelement vervollständigende, angeschweißte Draht besteht dann aus Platin. Die Werkstoff-Kombination kann je nach dem gewünschten Temperatur-Meßbereich variiert werden. Es sind Thermoelement-Werkstoffe bekannt, die Messungen bis über 2000°C ermöglichen.

Im Stand der Technik ist es bisher kaum gelungen, zuverlässige Meßergebnisse bei sehr hohen Temperaturen, d.h. oberhalb von 1400°C, zu gewinnen.

Die Zuverlässigkeit von DTA- bzw. DSC-Messungen bei extrem hohen Temperaturen wird erfindungsgemäß durch folgende Maßnahmen gefördert.

Es können Hitzeschilder am Träger befestigt werden. Bevorzugt werden diejenigen Hitzeschilder, die der Heizeinrichtung und dem Meßkopf am nächsten angeordnet sind, aus Keramik gefertigt. Die Hitzeschilder werden bevorzugt mit einer Metallbeschichtung, insbesondere aus Platin, versehen. Vom Meßkopf weiter entfernt angeordnete Hitzeschilder können aus Metall bestehen.

Die Innenwandung des Ofens ist zumindest in Höhe des Meßkopfes ebenfalls mit einer Metallschicht, bevorzugt aus Platin, versehen. Die Beschichtung erstreckt sich vorteilhaft ober- und unterhalb des Meßkopfes bis hin zu den obengenannten Hitzeschildern.

Weiterhin ist es von Vorteil, den Träger des Meßkopfes als einen relativ langen Stab auszubilden. Der Stab muß jedenfalls wesentlich länger sein als die wirksame Heizzone. Er muß eine gute thermische Isolierung aufweisen und ist bevorzugt so lang, daß an seinem Fuß praktisch Zimmertemperatur herrscht.

Mit den vorstehend beschriebenen Maßnahmen ist es möglich, ein Temperaturprofil im Bereich des Meßkopfes zu erreichen, daß etwa trapezförmig ist und somit im Bereich des Meßkopfes eine völlig homogene Temperaturverteilung ermöglicht.

Nachfolgend werden Ausführungsbeispiele der Erfindung anhand der Zeichnung näher beschrieben. Es zeigt:
- Fig. 1: schematisch einen Ofen mit einem eingeschobenen Meßkopf;
- Fig. 2: den Meßkopf und den ihn abstützenden Träger;
- Fig. 3: Typische Meßkurven;
- Fig. 4: eine Draufsicht auf einen Meßkopf mit drei Aufnahmen für Gefäße;
- Fig. 5: einen Schnitt entlang der Linie I-II gemäß Fig. 4;
- Fig. 6: eine schematische Draufsicht auf ein weiteres Ausführungsbeispiel eines Meßkopfes;
- Fig. 7: wesentliche Teile eines weiteren Ausführungsbeispieles einer Vorrichtung für die DTA;
- Fig. 8: die Schaltung von Thermoelementen; und
- Fig. 9: schematisch eine Vorrichtung, mit der gleichzeitig eine DTA und eine TG durchgeführt werden können.

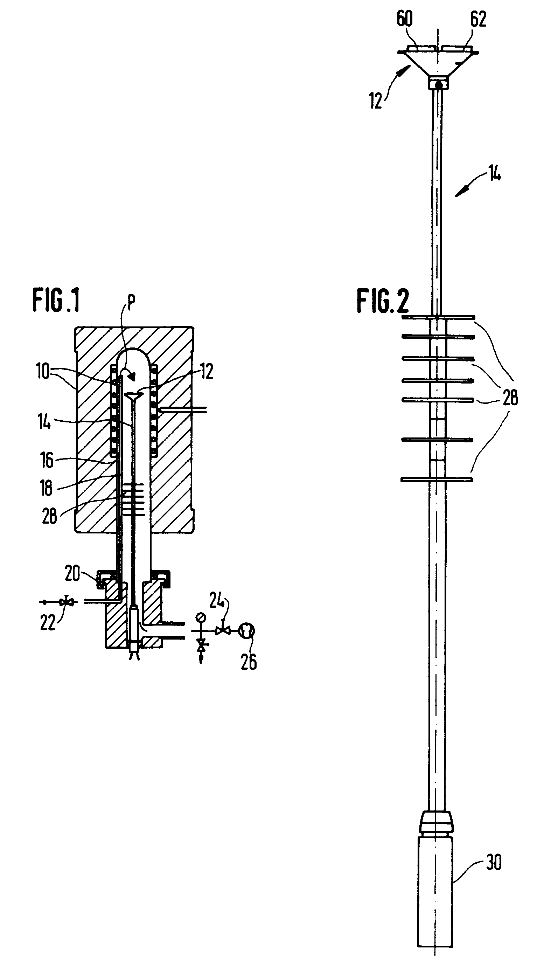

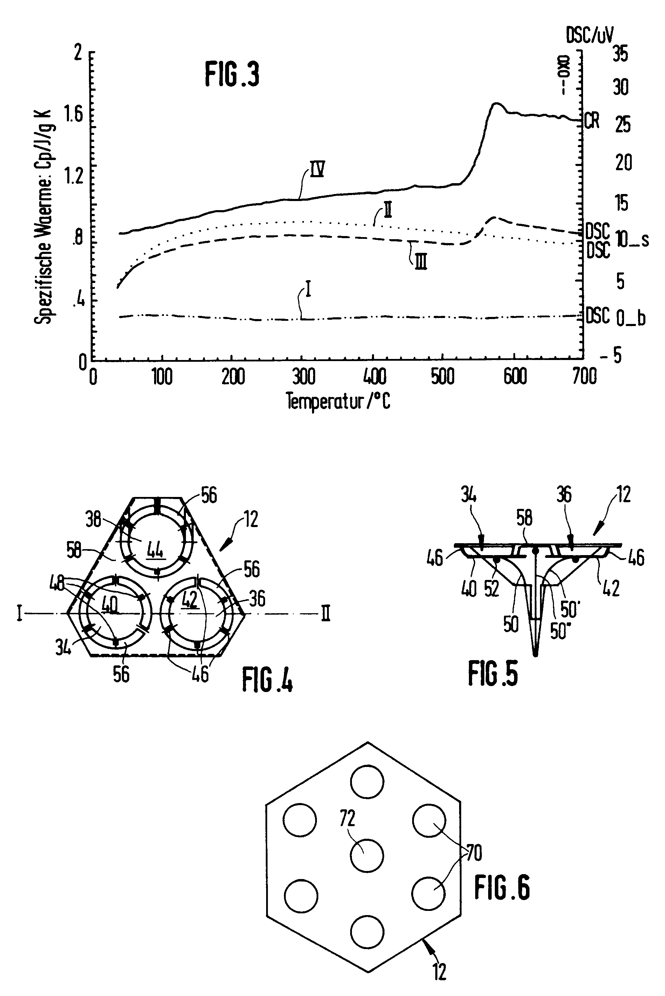

Der in Fig. 1 gezeigte Ofen 10 weist eine Heizwicklung aus Edelmetall auf. Ein Meßkopf 12 ist derart im Ofenraum angeordnet, daß an seinem Ort eine möglichst homogene Temperaturverteilung beim Aufheizen des Ofens gegeben ist. Der Meßkopf 12 ist auf einem vertikal aufwärts gerichteten Träger 14 austauschbar befestigt und wird weiter unten näher beschrieben.

Der Träger 14 besteht aus Keramik und weist mehrere Kapillarbohrungen auf, durch welche Thermofühler-Zuleitungen für den Meßkopf 12 geführt sind.

Weiterhin sind gemäß Fig. 1 ein Schutzrohr 16 und ein Gaseinleitungsröhrchen 18 vorgesehen. Mit einem Verschluß 20 ist das Innere des Ofens 10 vakuumdicht verschließbar. Über ein Ventil 22 kann ein Spülgas in das Gaseinleitungsrohr 18 gegeben werden, welches an dessen oberem Ende gemäß dem Pfeil P austritt, damit im Ofen eine gewünschte Gas-Atmosphäre hergestellt werden kann. Mittels eines Ventils 24 und einer Vakuumpumpe 26 kann der Ofen evakuiert werden.

Scheiben 28 dienen als Strahlungsschutz. Ein Stecker 30 hält den Träger 14 und ermöglicht eine vakuumdichte Durchführung der elektrischen Zuleitungen zum Meßkopf 12.

Der Meßkopf 12 weist gemäß den Fig. 4 bis 6 drei Aufnahmen 34, 36, 38 auf, in welche Gefäße 60, 62 (in Fig. 2, 7 und 9 nur zwei gezeigt) einsetzbar sind.

Die Gefäße werden auf versenkt angeordnete Böden 40, 42, 44 abgestellt. Die Böden 40, 42, 44 sind über dünne Stege 46 mit einer Plattform 58 verbunden. Wie Fig. 5 zu entnehmen ist, sind also die Böden 40, 42, 44 der Aufnahmen in bezug auf die Ebene der Plattform 58 vertieft angeordnet und die Stege 46 erstrecken sich etwa vertikal aufwärts. Hierdurch stehen die Gefäße raumsparend relativ eng beieinander, wobei gleichzeitig die Wärmeleitung aufgrund der relativ langen und dünnen Stege 46 gering gehalten ist. Zwischen den Stegen 46 sind Freiräume 56 ausgespart.

Mittels Zentrierlaschen 48 werden die Gefäße 60, 62 (Fig. 2) exakt mittig auf den Böden 42, 40, 44 positioniert. Die Zentrierlaschen sind nur in Fig. 4 in der unten links gezeigten Aufnahme 34 mit dem Bezugszeichen 48 versehen. Auch die übrigen Böden 42, 44 gemäß den Fig. 4 und 5 sind mit entsprechenden Zentrierlaschen 48 versehen. Die in die Aufnahmen abgestellten Gefäße sind genau so bemessen, daß sie zwischen die Zentrierlaschen passen.

Die Meßköpfe 12 sind insgesamt aus einem Thermoelement-Werkstoff gefertigt, beim dargestellten Ausführungsbeispiel aus Platin/Rhodium. Die Temperaturen an den Böden 40, 42, 44 bzw. an der Plattform 58 werden mittels Thermoelement-Leitungen 50, 50′, 50'' (Fig. 5) aus Platin gemessen, die mittig an den Böden bzw. an der Plattform 58 angeschweißt sind. Die Schweißpunkte an den Böden sind in Fig. 5 durch das Bezugszeichen 52 angedeutet.

Fig. 3 zeigt das Ergebnis einer dynamischen Wärmestrom-Differenzkalorimetrie-Messung mit einem Meßkopf gemäß den Fig. 4 und 5. Mit einer einzigen Messung nach der Nullinienbestimmung, d.h. mit einem einzigen Durchlauf des Temperaturprogramms, können alle Kurven II bis IV gewonnen werden, während beim Stand der Technik hierfür noch zwei Messungen erforderlich waren, also die doppelte Zeit benötigt wurde.

Das Meßergebnis gemäß Fig. 3 betrifft die Bestimmung der spezifischen Wärmekapazität an einem Glas, in dem radioaktive Abfälle eingelagert sind. Als Standardprobe wurde zur Kalibrierung Saphir gewählt.

Die Kurve I ist die sogenannte Basislinie. Sie wird experimentell mit den gleichen Parametern bestimmt, die auch zur Vermessung einer Probe verwendet werden, jedoch mit der einzigen Ausnahme, daß alle Gefäße (Becher) leer sind. Die Kurve II entspricht der Kalibrierung, zum Beispiel mittels Saphir.

Die Kurve III entspricht der dynamischen Wärmestrom-Differenzkalorimetrie der zu untersuchenden Probe und die Kurve IV zeigt die in bekannter Weise errechnete spezifische Wärmekapazität cₚ, also die partielle Ableitung (Differentialquotient) der Enthalpie nach der Temperatur bei konstantem Druck.

Die Kurve I in Fig. 3 ist, wie gesagt, die Basislinie. Bei der Dreifachanordnung gemäß Fig. 4 wird zunächst eine Messung zur Bestimmung der Basislinie I durchgeführt. Jede weitere Messung liefert dann in Verbindung mit der ersten Messung (deren Ergebnis in einem Rechner abgespeichert wird) alle Informationen, die für die Bestimmung der spezifischen Wärme der Probe erforderlich sind.

Fig. 6 zeigt ein weiteres Ausführungsbeispiel eines Meßkopfes 12, bei dem mehrere Proben gleichzeitig vermessen werden können. In einer zentrischen Aufnahme 72 kann ein Gefäß mit einer Standardprobe positioniert werden, während die einzelnen zu vermessenden Proben in den symmetrisch um die zentrale Aufnahme 72 herum angeordneten weiteren Aufnahmen 70 positionierbar sind.

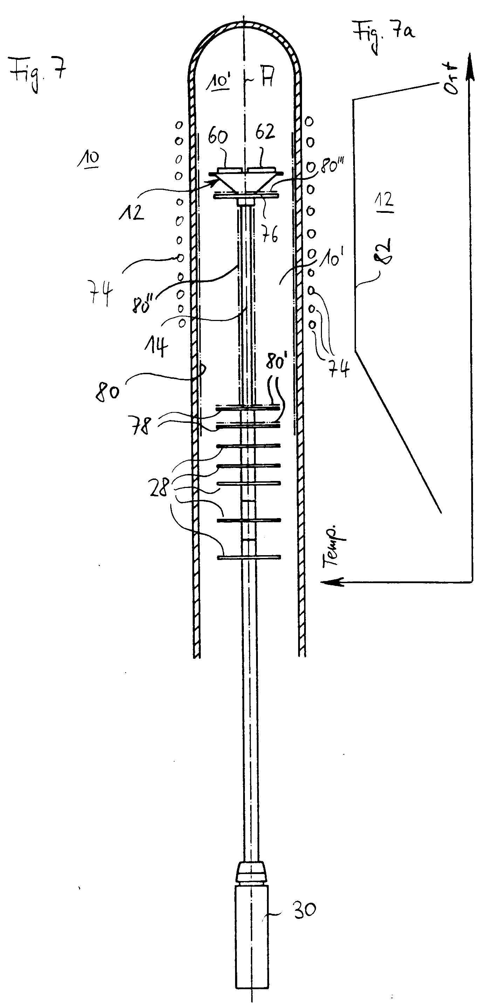

Fig. 7 zeigt eine Vorrichtung, die dem Ausführungsbeispiel gemäß den Fig. 1, 2, 4 und 5 ähnlich ist. Einander entsprechende Bauteile sind mit gleichen Bezugszeichen versehen.

Gemäß Fig. 7 ragt der Träger 14 in den Hohlraum 10′ des Ofens 10. Die Längsachse des Trägers 14 fällt mit der Längsachse A des kreiszylinderförmigen Hohlraums zusammen. Alle am Träger 14 befestigten Bauteile bilden im wesentlichen ein symmetrische Anordnung in bezug auf die Längsachse A.

Eine Heizwicklung 74 erstreckt sich oberhalb und unterhalb des Meßkopfes 12.

Unterhalb des Meßkopfes 12 ist ein Hitzeschild 76 aus Keramik angeordnet. In Abwandlung des Ausführungsbeispiels gemäß Fig. 1 sind oberhalb der Strahlungsschutzschilder 28 aus Metall zwei Keramikschilder 78 angeordnet.

Die Innenwand des Hohlraums 10′ ist mit einer Platinschicht 80 versehen. Die Platinschicht 80 erstreckt sich oberhalb des Meßkopfes 12 und reicht kontinuierlich bis zu den Keramikschildern 78 bzw. den Strahlungsschutzschildern 28. Auch auf der dem Meßkopf 12 zugekehrten Oberseite der Keramikschilder 78 sind jeweils Platinbeschichtungen 80′ vorgesehen.

Weiterhin ist auch der Träger 14 zwischen den Schutzschildern und dem Meßkopf mit einer Platinschicht 80'' versehen. Auch das Hitzeschild 76 aus Keramik am Meßkopf 12 weist auf seiner Oberseite eine Platinschicht 80''' auf.

Fig. 7a zeigt ein Temperaturprofil 82, das mit der in Fig. 7 gezeigten Anordnung erzielt wird. In Fig. 7a ist die Temperatur als Funktion des Ortes aufgetragen. Dabei sind die Fig. 7 und 7a örtlich einander zugeordnet. Das Temperaturprofil 82 ist etwa trapezförmig und weist deutlich ober- und unterhalb des Meßkopfes 12 steile Flanken auf. Der Meßkopf 12 befindet sich somit in einer völlig homogenen Temperaturverteilung.

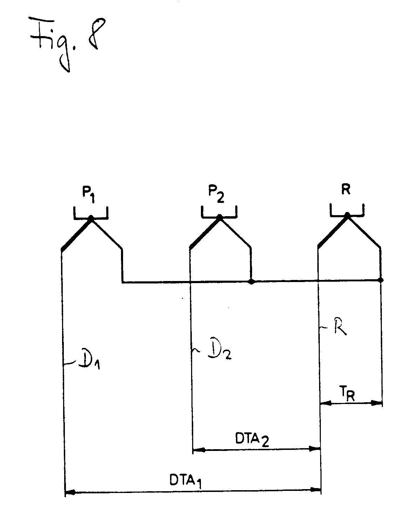

Fig. 8 zeigt schematisch das Schaltbild der Thermoelemente bei einer Vorrichtung gemäß den Fig. 1 bzw. 7. Die Probengefäße sind mit den Bezugszeichen P₁ und P₂ angedeutet. Die Referenzprobe mit dem Bezugszeichen R. Wie gesagt, bilden die Böden 40, 42, 44 der Gefäße jeweils selbst einen Schenkel eines Thermoelementes. Als Material geeignet ist Platin mit einem 10 %-igen Rhodiumanteil oder auch Platin mit einem 30 %-igen Rhodiumanteil. Aus diesem Material kann der gesamte Meßkopf gefertigt sein. Die jeweils zweiten Schenkel der Thermoelemente sind durch Drähte D₁, D₂ und R gebildet, die entsprechend entweder aus reinem Platin oder aus Platin mit 6 % Rhodium bestehen. Je nach Temperaturbereich können auch andere Thermoelementwerkstoffe verwendet werden.

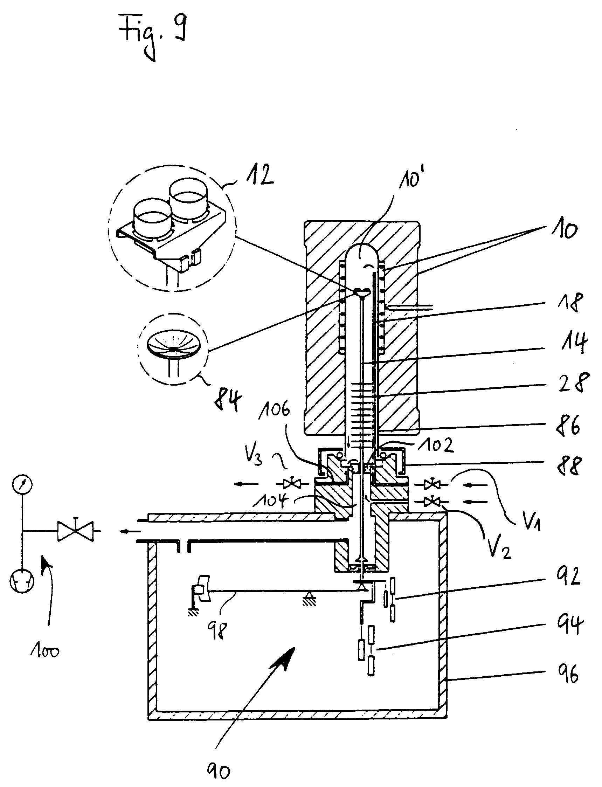

Fig. 9 zeigt eine Vorrichtung, mit der eine sogenannte simultane Thermoanalyse durchgeführt werden kann, nämlich zum einen eine dynamische Differenz-Kalorimetrie (DTA/DSC) und zum anderen eine Thermogravimetrie (TG). Bei der TG wird die Massenänderung einer Probe als Funktion der Temperatur oder Zeit gemessen.

Gemäß Fig. 9 ist der DSC-Probenträger 12 über den Träger 14 mit einer Wägeeinrichtung 90 verbunden. Die anhand der oben beschriebenen Ausführungsbeispiele bereits erläuterten Bauteile sind mit gleichen Bezugszeichen versehen und brauchen hier nicht erneut beschrieben zu werden. Ein Schutzrohr 86 reicht bis zu einem vakuumdichten Schnellverschluß 88, der die DSC-Anordnung einschließlich des Ofens mit der Wägeeinrichtung 90 verbindet. Die als solche bekannte Wägeeinrichtung weist einen induktiven Wegaufnehmer 92 und eine elektromagnetische Kompensationseinrichtung 94 auf. Die Einrichtung ist in einem vakuumdichten Gehäuse 96 angeordnet. Ein Waagebalken 98 zeigt eine Massenänderung der Probe im Meßkopf 12 an. Eine Evakuiereinrichtung 100 dient dem Erzeugen des Vakuums im Probenraum 10′ und im Gehäuse 96. Über den Ventil V₁ wird ein Reaktionsgas über das Gaseinleitungsrohr 18 in den Probenraum 10′ des Ofens 10 oberhalb des Meßkopfs 12 geführt und über ein weiteres Ventil V₂ strömt ein Schutzgas unterhalb einer Drosselstelle 102 in einen Hohlraum 104 und in die Wägeeinrichtung 90. Dieses Schutzgas strömt durch die Drosselstelle 102 in den unteren Bereich des Probenraums 10′ und wird zusammen mit dem Reaktionsgas über das Ventil V₃ und die Leitung 106 aus der Vorrichtung entfernt.

Zusätzlich zum DSC-Probenträger 12 zeigt Fig. 9 noch einen alternativ hierzu verwendbaren TG-Probenträger 84, der nur für thermogravimetrische Messungen Verwendung findet.

## Patentansprüche

1. Vorrichtung für die Differenzthermoanalyse mit einem Meßkopf (12), der an der Spitze eines Trägers (14) angeordnet ist und zumindest 2 Aufnahmen für Gefäße (60, 62) aufweist, in die eine zu untersuchende Probe und eine Standardprobe eingebbar sind, sowie Thermofühler (50) an den Aufnahmen nahe den Böden der Gefäße, wobei zumindest eine der Aufnahmen in bezug auf andere Aufnahmen gleiche Wärme-Übertragungseigenschaften aufweist, und mit einem Ofen (10), in dem ein zylindrischer Hohlraum (10') ausgebildet ist, der von einer Heizeinrichtung (74) ummantelt ist und in den der Meßkopf (12) zentrisch ragt,
dadurch **gekennzeichnet,** daß im Meßkopf die zumindest 2 Aufnahmen (34, 36, 38) für die Gefäße (60, 62) als Vertiefungen in einer einzigen Metall-Plattform (58) ausgebildet sind, wobei die Böden (40, 42, 44) der Aufnahmen über Stege (46) mit der übrigen Plattform (58) verbunden sind und daß die Innenwand des Hohlraums (10') zumindest teilweise mit einer Metallschicht (80), insbesondere einer Platinschicht, versehen ist.

2. Vorrichtung nach Anspruch 1,
dadurch **gekennzeichnet,** daß die Metallbeschichtung sich kontinuierlich oberhalb und unterhalb des Meßkopfes (12) erstreckt.

3. Vorrichtung nach einem der Ansprüche 1 oder 2,
dadurch **gekennzeichnet,** daß der Träger (14) sich in Richtung der Längsachse (A) des Hohlraumes (10') wesentlich länger erstreckt als die Heizwicklung (74).

4. Vorrichtung nach einem der vorhergehenden Ansprüche,
dadurch **gekennzeichnet,** daß zusätzlich zur Differenzthermoanalyseneinrichtung eine Einrichtung für eine Thermogravimetrie vorgesehen ist, wobei der Träger (14) mit seinem vom Meßkopf (12) abgekehrten Ende eine Wägeeinrichtung (90) beaufschlagt.

5. Vorrichtung nach Anspruch 4,
dadurch **gekennzeichnet,** daß der Meßkopf für die Differenzthermoanalyse so mit der Wägeeinrichtung (90) verbunden ist, daß gleichzeitig eine thermogravimetrische und eine kalorimetrische Messung an der gleichen Probe durchführbar sind.

6. Vorrichtung nach einem der vorhergehenden Ansprüche,
dadurch **gekennzeichnet,** daß die Aufnahmen (34, 36, 38) an den Ecken eines gleichschenkligen Dreiecks angeordnet sind.

7. Vorrichtung nach einem der vorhergehenden Ansprüche,
dadurch **gekennzeichnet,** daß der Meßkopf (12) aus einem Thermoelement-Werkstoff besteht.

8. Vorrichtung nach Anspruch 7,
dadurch **gekennzeichnet,** daß jeder der Böden (40, 42, 44) als ein Schenkel eines Thermoelementes ausgebildet ist und daß die Böden in elektrisch leitender Verbindung stehen.

## Claims

1. Apparatus for differential thermal analysis, comprising a measuring head (12), mounted at the tip of a support member (14) and having at least 2 locations receiving vessels (60, 62) capable of holding a sample to be analyzed and a standard probe, as well as temperature probes (50) at the locations, adjacent the bottoms of the vessels, in which at least one of the locations has similar heat transfer properties with respect to other ones of the locations, and an oven (10) in which a cylindrical cavity (10') is formed which is wrapped with a heating device (74) and into which the measuring head (12) is centrally projecting,
**characterized** in that the at least 2 locations (34, 36, 38) for the vessels (60, 62) have been formed in the measuring head in the shape of depressions in a single metal platform (58), wherein the bottoms (40, 42, 44) of the locations are connected by means of ribs (46) to the rest of the platform (58), and in that the inside wall of the cavity (10') is at least in part provided with a metal layer (80), more particularly with a platinum layer.

2. Apparatus according to claim 1,
**characterized** in that the metal coating is continuously extending above and below the measuring head (12).

3. Apparatus according to any of claims 1 or 2,
**characterized** in that the support member (14) is of a considerably greater length in the direction of the longitudinal axis (A) of the cavity (10') than is the heating coil (74).

4. Apparatus according to any of the preceding claims,
**characterized** in that, in addition to the differential thermal analysis device, provision is made of a thermogravimetric device, whereby the support member (14) has its end remote from the measuring head (12) actuating a weighing device (90).

5. Apparatus according to claim 4,
**characterized** in that the measuring head for the differential thermal analysis is associated with the weighing device (50) in such a manner that a thermogravimetric and a calorimetric measurement can be made on the same sample, at the same time.

6. Apparatus according to any of the preceding claims,
**characterized** in that the locations (34, 36, 38) are arranged at the corners of an isosceles triangle.

7. Apparatus according to any of the preceding claims,
**characterized** in that the measuring head (12) consists of a thermocouple material.

8. Apparatus according to claim 7,
**characterized** in that each one of the bottoms (40, 42, 44) is formed as the limb of a thermocouple, and in that the bottoms are electrically conductively connected with one another.

## Revendications

1. Dispositif d'analyse thermale différentielle, comprenant une tête de mesure (12), disposée au bout d'un support (14) et ayant au moins 2 logements destinés à recevoir des récipients (60, 62) capables de tenir un échantillon à analyser et un spécimen standard, ainsi que des sondes de température (50) au droit des logements, à proximité des fonds des récipients, l'un des logements, au moins, ayant des propriétés de transfert de chaleur similaires par rapport à d'autres des logements, et un four (10), à l'intérieur duquel une cavité cylindrique (10') est réalisée qui est enrobée d'un dispositif de chauffage (74) et dans laquelle la tête de mesure (12) s'introduit centralement,
**caractérisé** en ce que les 2 logements (34, 36, 38), au moins, pour les récipients (60, 62) sont réalisés dans la tête de mesure sous la forme d'évidements dans une seule plate-forme métallique (58), les fonds (40, 42, 44) des logements étant reliés par des nervures (46) au reste de la plate-forme (58), et en ce que la paroi interne de la cavité (10') est munie, en partie, au moins, d'une couche métallique (80), plus particulièrement d'une couche de platine.

2. Dispositif selon la revendication 1,
**caractérisé** en ce que le couchage métallique s'étend en continu au-dessus et au-dessous de la tête de mesure (12).

3. Dispositif selon l'une quelconque des revendications 1 ou 2,
**caractérisé** en ce que le support (14) a une longueur, prise dans le sens de l'axe longitudinal (A) de la cavité (10'), qui est considérablement plus grande que celle de l'enroulement chauffant (74).

4. Dispositif selon l'une quelconque des revendications précédentes,
**caractérisé** en ce que l'on a prévu, à part du dispositif d'analyse thermale différentielle, un dispositif de thermogravimétrie, cas dans lequel le bout du support (14) qui est éloigné de la tête de mesure (12) actionne un dispositif de pesée (90).

5. Dispositif selon la revendication 4,
**caractérisé** en ce que la tête de mesure pour l'analyse thermale différentielle est associée au dispositif de pesée (60) de telle manière qu'une mesure thermogravimétrique et une mesure calorimétrique peuvent être effectuées sur le même échantillon en même temps.

6. Dispositif selon l'une quelconque des revendications précédentes,
**caractérisé** en ce que les logements (34, 36, 38) sont disposés aux angles d'un triangle isocèle.

7. Dispositif selon l'une quelconque des revendications précédentes,
**caractérisé** en ce que la tête de mesure (12) consiste en un matériau pour thermocouples.

8. Dispositif selon la revendication 7,
**caractérisé** en ce que chacun des fonds (40, 42, 44) est réalisé sous la forme d'une branche d'un thermocouple, et en ce que les fonds ont une connexion électriquement conductrice les uns avec les autres.
